Europäisches Patentamt

European Patent Office

Office européen des brevets

(11) Veröffentlichungsnummer: **0 040 258**
**A1**

(12) # EUROPÄISCHE PATENTANMELDUNG

(21) Anmeldenummer: **80103263.2**

(22) Anmeldetag: **12.06.80**

(51) Int. Cl.³: **F 16 L 33/02**
**F 16 B 2/08**

(30) Priorität: **17.05.80 DE 8013412 U**

(43) Veröffentlichungstag der Anmeldung:
**25.11.81 Patentblatt 81/47**

(84) Benannte Vertragsstaaten:
**AT BE CH DE FR GB IT LI LU NL SE**

(71) Anmelder: **Remih, Harry**
**Hierzigsberg 2**
**Remich(LU)**

(72) Erfinder: **Remih, Harry**
**Hierzigsberg 2**
**Remich(LU)**

(74) Vertreter: **Schönherr, Wolfgang et al,**
**Patentanwälte Wolfgang Schönherr Dipl.-Ing.**
**Karl-Heinz Serwe Hawstrasse 28**
**D-5500 Trier(DE)**

(54) **Kunststoffschlauchschelle.**

(57) Schlauchschelle aus einem zylindermantelförmig angeordneten, elastisch biegsamen Schellenband (1) mit in tangentialer Richtung übereinander schiebbaren Schellenbandenden (2,3), die einander zugewandte keilförmige Verriegelungsrippen (4) aufweisen, welche in ihrer Klemmstellung
ineinandergreifen, wobei parallel und beabstandet zu jedem
Schellenbandende (2,3) eine keilförmige sich verjüngende
Zunge (5,6) angeordnet ist und daß an einem Ende oder beiden Enden der Zunge (5,6) und am gegenüberliegenden Ende
(2) des Schellenbandes (1) oder an beiden Schellenbandenden (2,3) Ansätze (7,8) angeordnet sind, welche in der Klemmstellung eine Verschiebung der Schellenbandenden (2,3) in
Richtung der Zylinderachse verhindern.

Fig.1

Kunststoffschlauchschelle

Die Erfindung bezieht sich auf eine Kunststoffschlauchschelle aus einem zylindermantelförmig ausgebildeten, biegsamen Schellenband, dessen beide Enden zur Verringerung des Schellendurchmessers in etwa tangentialer Richtung übereinander schiebbar und in Gegenrichtung miteinander verriegelbar sind, wobei mindestens ein Ende des Schellenbandes eine federnd ausgebildete Zunge aufweist, die in übereinandergeschobener Stellung der Enden das andere Ende des Schellenbandes in Umfangsrichtung übergreift und unter Druck an dem anderen Schellenbandende anliegt.

Derartige Schlauchschellen dienen zur Befestigung eines Schlauches auf einem Verbindungsstück. Dazu wird zunächst die Schlauchschelle in geöffnetem Zustand über den Schlauch geschoben und dann der Schlauch auf das Verbindungsstück gesteckt. Danach wird die Schlauchschelle zusammengedrückt, so daß sich die Enden der Schlauchschelle übereinander schieben und gegeneinander verriegeln. Durch die Verringerung des Durchmessers der Schlauchschelle wird dann der Schlauch auf dem Anschlußstück festgehalten.

Wie die Erfahrung gezeigt hat, weist eine derartige, in einem Kunststoffspritzverfahren hergestellte Schlauchschelle den Nachteil auf, daß durch in der Schlauchverbindung auftretende Druckschwankungen die Schlauchschelle im Laufe der Zeit gelöst wird und zwar verschieben sich die beiden Schellenbandenden in Richtung der Zylinderachse, so daß die Verriegelungselemente außer Eingriff kommen und die Schlauchschelle sich ausdehnen kann.

Die Aufgabe der Erfindung besteht daher darin, eine Schlauchschelle der eingangs genannten Art vorzuschlagen, bei der ein sicherer Sitz der Schlauchschelle auf dem Schlauch gewährleistet und die in einem einfachen Spritzverfahren herstellbar ist.

Diese Aufgabe wird dadurch gelöst, daß an dem freien Endabschnitt der Zunge ein in radialer Richtung verlaufender Ansatz seitlich angeordnet ist, der in übereinandergeschobener Stellung der Schellenbandenden das andere Schellenbandende seitlich überragt, und daß an dem freien Endabschnitt des anderen Schellenbandendes auf der gleichen Schellenseite ein weiterer Ansatz seitlich angeordnet ist, der in übereinandergeschobener Stellung des Schellenbandendes das der Zunge zugeordnete Schellenband seitlich übergreift.

Bei einer anderen vorteilhaften Ausführungsform ist an dem freien Endabschnitt des der Zunge zugeordneten Schellenbandendes ein in radialer Richtung verlaufender Ansatz seitlich angeordnet, der in übereinandergeschobener Stellung der Schellenbandenden das andere Schellenbandende seitlich überragt, und ist an dem freien Endabschnitt des anderen Schellenbandendes auf der gleichen Schellenseite ein weiterer Ansatz seitlich angeordnet, der in übereinandergeschobener Stellung der Schellenbandenden die Zunge seitlich übergreift.

Vorteilhaft sind die Schellenbandenden und/oder Zungen keilförmig ausgebildet.

Vorzugsweise weisen die Schellenbandenden auf einander zugewandten Flächen in Zylinderlängsrichtung verlaufende Verriegelungsrippen auf. Die Verriegelungsrippen sind vorzugsweise keilförmig ausgebildet.

Vorzugsweise sind die Verbindungsabschnitte des Schellenbandes zwischen Schellenbandenden und zugeordneten Zungen als im wesentlichen in tangentialer Richtung verlaufende Griffflächen ausgebildet.

Die erfindungsgemäße Schlauchschelle ist in den Zeichnungen beispielhaft dargestellt. Es zeigen:

Fig. 1 eine erfindungsgemäße Schlauchschelle in geöffnetem Zustand in Seitenansicht,

Fig. 2 die Schlauchschelle nach Fig. 1 in Draufsicht,

Fig. 3 die Schlauchschelle in geschlossenem Zustand in Seitenansicht,

Fig. 4 eine andere Ausführungsform einer erfindungsgemäßen Schlauchschelle in Seitenansicht,

Fig. 5 eine weitere Ausführungsform einer Schlauchschelle in Seitenansicht,

Fig. 6 eine noch andere Ausführungsform einer Schlauchschelle in Seitenansicht.

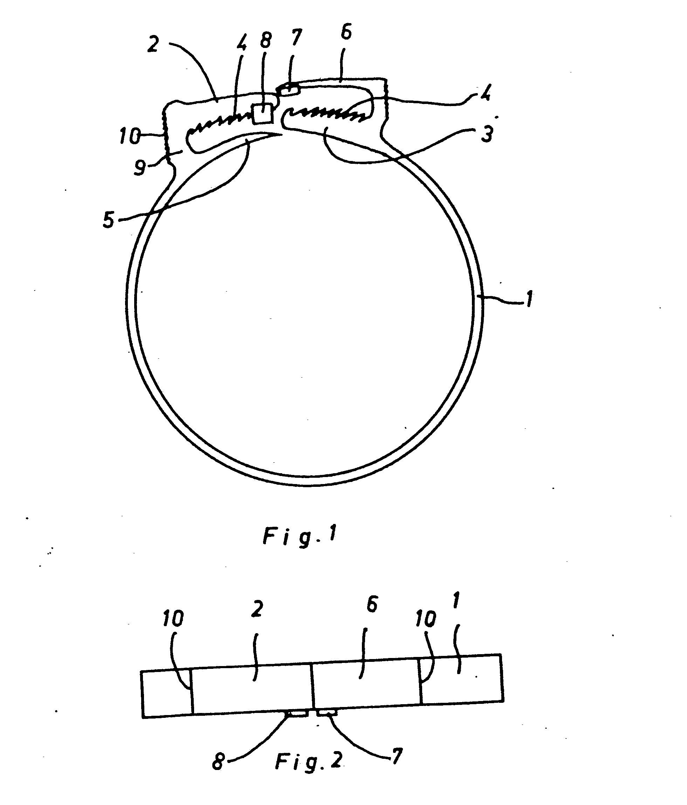

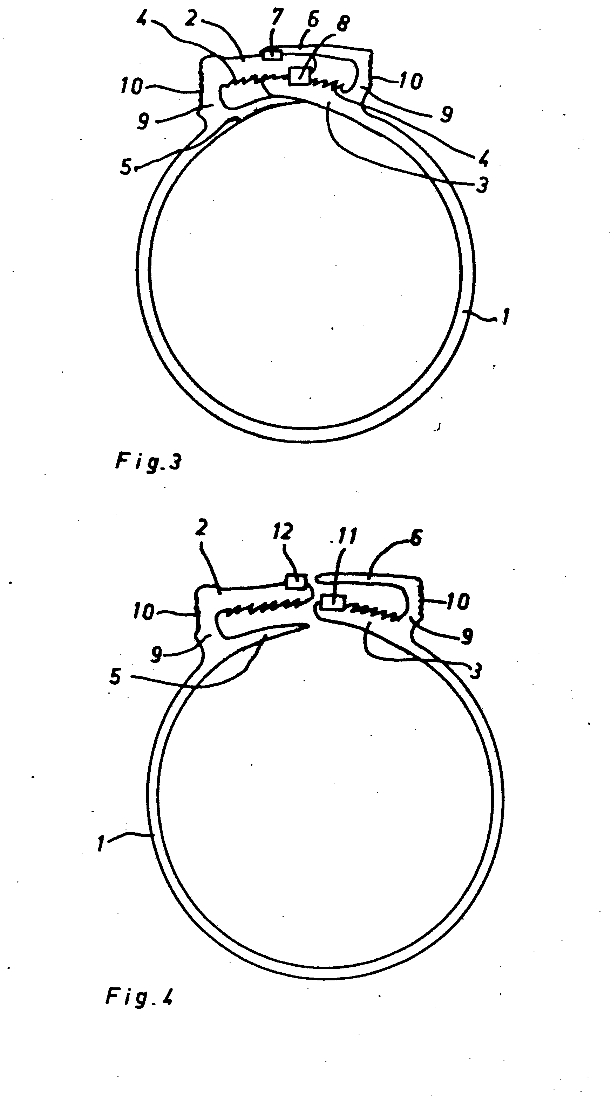

Nach den Fig. 1 bis 3 besteht eine Schlauchschelle aus einem zylindermantelförmig angeordneten, biegsamen Schellenband 1 aus Kunststoff. Die Enden des Schellenbandes sind zur Verringerung des Schellendurchmessers in tangentialer Richtung übereinander schiebbar. Zur Verriegelung der beiden Enden weisen die Schellenbandenden 2 und 3 in einander zugewandten Flächen in Richtung der Zylinderlängsachse verlaufende, keilförmige Rippen 4 auf, die in einandergeschobener Stellung der Enden ineinandergreifen, wie dies in Fig. 3 dargestellt ist. Parallel und im Abstand zu jedem Schellenbandende 2 und 3 verläuft eine keilförmig sich verjüngende Zunge 5 bzw. 6, die jeweils in übereinandergeschobener Stellung der Schellenbandenden das jeweils andere Schellenbandende in Umfangsrichtung übergreift. Die Zungen 5 und 6 sind dabei derart angeordnet, daß jedes Schellenbandende zwischen einer Zunge und dem anderen, zugeordneten Schellenbandende eingeklemmt ist, wodurch die Verriegelungsrippen 4 sicher ineinander gehalten werden.

Die Schlauchschelle weist nun auf einer Schellenseite an dem vorderen, freien Endabschnitt der einen Zunge 6 einen in radialer Richtung zum zugeordneten Schellenbandende 3 verlaufenden Ansatz 7 auf, der in übereinandergeschobener Stellung der Schellenbandenden das andere Schellenbandende 2 seitlich überragt. Weiterhin ist an dem vorderen, freien Endabschnitt des anderen Schellenbandendes 2 auf der gleichen Schellenseite ein weiterer Ansatz 8 angeordnet, der ebenfalls in radialer Richtung zum einen Schellenende verläuft und der in übereinandergeschobener Stellung der Schellenbandenden das der Zunge zugeordnete Schellenbandende seitlich übergreift, wie dies in Fig. 3 dargestellt ist.

Durch diese beiden Ansätze wird eine Verschiebung der ineinandergeschobenen Schellenenden in Richtung der Zylinderlängsachse verhindert, so daß durch die aufgrund der Druckschwankungen auftretenden Bewegungen die Schlauchschelle nicht gelöst werden kann.

Da weiterhin die Ansätze auf einer Seite der Schelle angeordnet sind, ist die Schlauchschelle auf einfache Weise aus Kunststoff in einem Spritzverfahren herstellbar, wobei die Schlauchschelle leicht aus der Form entfernt werden kann. Die Verwendung von Kunststoff bietet außerdem den Vorteil, daß keine Korrosion auftritt.

Anstelle der in den Fig. 1 bis 3 gezeigten Anordnung der Ansätze kann auch vorgesehen sein, wie dies in Fig. 4 gezeigt ist, daß an dem vorderen, freien Endabschnitt des einer Zunge 6 zugeordneten Schellenbandendes 3 ein in radialer Richtung nach außen verlaufender Ansatz 11 seitlich angeordnet ist, der in übereinandergeschobener Stellung der Schellenbandenden das andere Schellenbandende 2 seitlich überragt und daß weiterhin an dem vorderen, freien Endabschnitt des anderen Schellenbandendes 2 ein weiterer, in gleicher Richtung verlaufender Ansatz 12 seitlich angeordnet ist, der in übereinandergeschobener Stellung der Schellenbandenden die Zunge 6 des einen Schellenbandendes 2 seitlich übergreift.

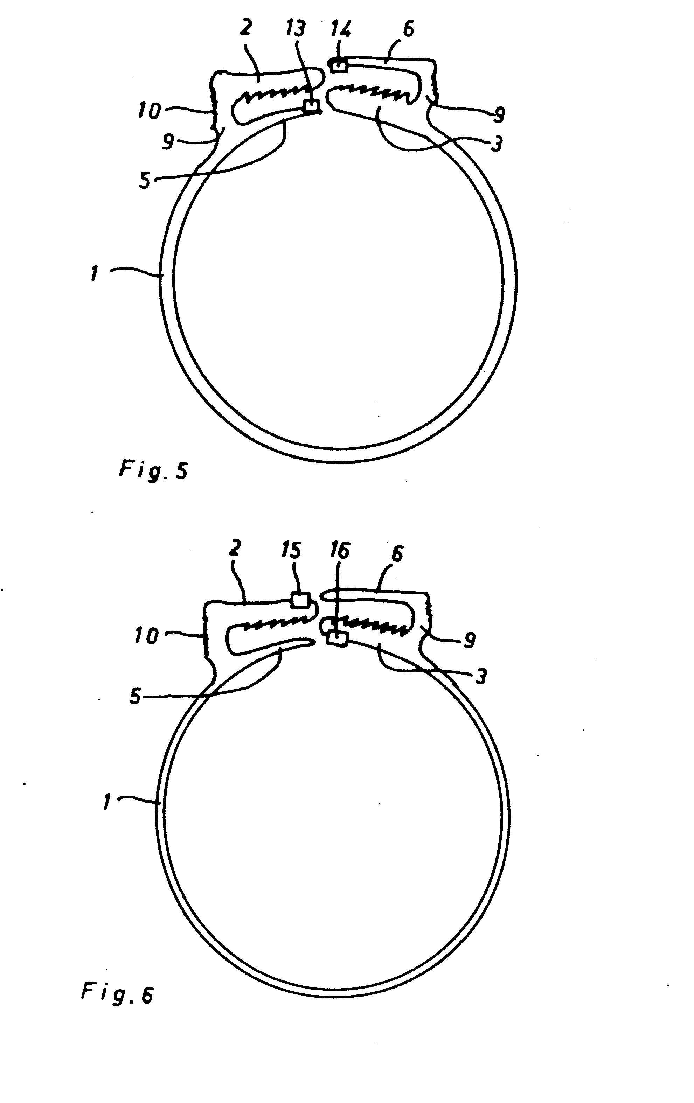

Wie Fig. 5 zeigt, ist es möglich, die Ansätze 13, 14 an den vorderen, freien Zungenabschnitten, in radialer Richtung zu den zugeordneten Schellenbandendabschnitten 2 und 3 verlaufend anzuordnen, so daß in übereinandergeschobener Stellung der Schellenbandenden das jeweils andere Schellenbandende von den Ansätzen seitlich übergriffen wird. Bei der Ausführungsform nach Fig. 6 sind an den freien Schellenbandendabschnitten 2 und 3, jeweils in radialer Richtung einander entgegengesetzt verlaufende Ansätze 15, 16 vorgesehen, die in übereinandergeschobener Stellung der Schellenbandenden die jeweils andere Zunge 5 und 6 seitlich übergreifen.

Nach dem Ausführungsbeispiel nach den Fig. 1 bis 3 sind die Verbindungsabschnitte 9 des Schellenbandes zwischen den Schellenbandenden 2 und 3 und den zugeordneten Zungen 5 und 6 als im wesentlichen in tangentialer Richtung verlaufende, Rippen tragende Griffflächen 10 ausgebildet. An diesen Griffflächen 10 kann eine Zange angesetzt werden und die Schlauchschelle zusammengepreßt werden, so daß ein sicherer Halt der Schelle auf dem zu verbindenden Schlauch gewährleistet ist.

Weiterhin kann durch die selbsttätige Verriegelung mit Hilfe der Verriegelungsrippen die Schelle jederzeit zur Verringerung des Schellendurchmessers weiter zusammengedrückt werden, so daß immer ein sicherer Sitz der Schlauchschelle gewährleistet ist.

Die Kunststoffschlauchschelle läßt sich in unterschiedlicher Größe herstellen, um für Schläuche, Leitungen o.dgl. mit verschiedenem Durchmesser benutzt werden zu können.

Patentansprüche

1. Kunststoffschlauchschelle aus einem zylindermantelförmig ausgebildeten, biegsamen Schellenband (1), dessen beide Enden (2, 3) zur Verriegelung des Schellendurchmessers in etwa tangentialer Richtung übereinander schiebbar und in Gegenrichtung miteinander verriegelbar sind, wobei mindestens ein Ende (3) des Schellenbandes eine federnd ausgebildete Zunge (6) aufweist, die in übereinandergeschobener Stellung der Enden das andere Ende (2) des Schellenbandes in Umfangsrichtung übergreift und unter Druck an diesem Schellenbandende anliegt, dadurch gekennzeichnet, daß am freien Endabschnitt der Zunge (6) ein in radialer Richtung verlaufender Ansatz (7) seitlich angeordnet ist, der in übereinandergeschobener Stellung der Schellenbandenden das andere Schellenbandende (2) seitlich überragt, und daß an dem freien Endabschnitt des anderen Schellenbandendes auf der gleichen Schellenseite ein weiterer Ansatz (8) seitlich angeordnet ist, der in übereinandergeschobener Stellung der Schellenbandenden das der Zunge (6) zugeordnete Schellenbandende (3) seitlich übergreift.

2. Kunststoffschlauchschelle aus einem zylindermantelförmig ausgebildeten, biegsamen Schellenband (1), dessen beide Enden (2, 3) zur Verringerung des Schellendurchmessers in etwa tangentialer Richtung übereinander schiebbar und

0040258

- 9 -

in Gegenrichtung miteinander verriegelbar sind, wobei mindestens ein Ende (3) des Schellenbandes eine federnd ausgebildete Zunge (6) aufweist, die in übereinandergeschobener Stellung der Enden das andere Ende (2) des Schellenbandes in Umfangsrichtung übergreift und unter Druck an diesem Schellenbandende anliegt, dadurch gekennzeichnet, daß am freien Endabschnitt des der Zunge (6) zugeordneten Schellenbandendes (3) ein in radialer Richtung verlaufender Ansatz (11) seitlich angeordnet ist, der in übereinandergeschobener Stellung der Schellenbandenden das andere Schellenbandende (2) seitlich überragt, und daß an dem freien Endabschnitt des anderen Schellenbandendes (2) auf der gleichen Schellenseite seitlich ein weiterer Ansatz (12) angeordnet ist, der in übereinandergeschobener Stellung der Schellenbandenden die Zunge (6) seitlich überragt.

3. Kunststoffschlauchschelle nach Anspruch 1 oder 2, dadurch gekennzeichnet, daß beiden Schellenbandenden (2, 3) je eine Zunge (5, 6) zugeordnet ist, die in übereinandergeschobener Stellung der Schellenbandenden das jeweils andere Schellenbandende in Umfangsrichtung übergreifen, und daß an den freien Zungenabschnitten oder den Schellenbandendabschnitten auf der gleichen Schellenseite seitlich Ansätze (7, 8 bzw. 11, 12) angeordnet sind, die in übereinandergeschobener Stellung der Schellenbandenden das jeweils andere Schellenbandende oder die jeweils andere Zunge seitlich übergreifen.

4. Kunststoffschlauchschelle nach einem der Ansprüche 1 bis 3, dadurch gekennzeichnet, daß die Schellenbandenden (2, 3) und/oder Zungen (5, 6) keilförmig ausgebildet sind.

5. Kunststoffschlauchschelle nach einem der Ansprüche 1 bis 4, dadurch gekennzeichnet, daß die Schellenbandenden (2, 3) auf den einander zugewandten Flächen in Zylinderlängsrichtung verlaufende Verriegelungsrippen (4) aufweisen.

6. Kunststoffschlauchschelle nach Anspruch 5, dadurch gekennzeichnet, daß die Verriegelungsrippen (4) keilförmig ausgebildet sind.

7. Kunststoffschlauchschelle nach einem der Ansprüche 1 bis 6, dadurch gekennzeichnet, daß die Verbindungsabschnitte (2, 3) des Schellenbandes (1) zwischen Schellenbandenden (2, 3) und zugeordneten Zungen (5, 6) als im wesentlichen in tangentialer Richtung verlaufende Griffflächen (10) ausgebildet sind.

0040258

Fig.1

Fig.2

Fig.3

Fig.4

Fig. 5

Fig. 6

Europäisches
Patentamt

EUROPÄISCHER RECHERCHENBERICHT

0040258

Nummer der Anmeldung

EP 80103263.2

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | **EINSCHLÄGIGE DOKUMENTE** | | |
| | FR - A1 - 2 419 422 (OCOPAP) <br> * Gesamt * | 4,5,6 <br> 7 | F 16 L 33/02 <br> F 16 B 2/08 |
| | — | | |
| | US - A - 4 128 918 (MATRIX IV INC.) <br> * Gesamt * | 4,5,6 <br> 7 | |
| | — | | |
| | DE - B - 1 957 699 (VAL-VI SOCIETA) <br> * Gesamt * | 5,6,7 | |
| | — | | RECHERCHIERTE SACHGEBIETE (Int. Cl. 3) |
| | US - A - 3 913 187 (NIFCO INC.) <br> * Gesamt * | 5,6,7 | F 16 L 3/00 <br> F 16 L 33/00 <br> F 16 B 2/00 |
| | — | | |
| | GB - A - 1 391 809 (BOWTHORPE CORP.) <br> * Gesamt * | 5,6 | |
| | — | | |
| | DE - A1 - 2 708 292 (EGLI, FISCHER) <br> * Gesamt * | 1,7 | |
| | ———— | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X̅ Der vorliegende Recherchenbericht wurde für alle Patentansprüche erstellt.

| Recherchenort | Abschlußdatum der Recherche | Prüfer |
|---|---|---|
| WIEN | 21-07-1980 | SCHUGANICH |

EPA form 1503.1 06.78